# EUROPÄISCHE PATENTSCHRIFT

(11) **EP 1 849 049 B1**
(45) Veröffentlichungstag und Bekanntmachung des Hinweises auf die Patenterteilung: **21.10.2015**
(21) Anmeldenummer: 06706720.7
(22) Anmeldetag: 07.02.2006
(51) Int. Cl.: G05B 19/418

(54) **SYSTEM ZUM ERFASSEN UND BEWERTEN BEDIENUNGSABHÄNGIGER VORGÄNGE UND/ODER KOMPONENTEN IN AUTOMATISIERTEN PRODUKTIONS- UND PRÜFABLÄUFEN**
SYSTEM FOR DETECTING AND EVALUATING OPERATION-DEPENDENT PROCESSES AND/OR COMPONENTS IN AUTOMATED PRODUCTION AND TEST SEQUENCES
SYSTEME POUR SAISIR ET EVALUER DES PROCESSUS ET/OU DES COMPOSANTES DEPENDANT D'UNE COMMANDE DANS DES PROCESSUS DE PRODUCTION ET DE CONTROLE AUTOMATISES

(30) Priorität: 11.02.2005 DE 102005006575
(43) Veröffentlichungstag der Anmeldung: 31.10.2007
(73) Patentinhaber: Battenberg, Günther, 35043 Marburg (DE)
(72) Erfinder: Battenberg, Günther, 35043 Marburg (DE)
(74) Vertreter: Grünecker Patent- und Rechtsanwälte PartG mbB
(86) Internationale Anmeldenummer: PCT/EP2006/001076
(87) Internationale Veröffentlichungsnummer: WO 2006/084666

(56) Entgegenhaltungen:
- US-A- 5 465 221
- US-A1- 2003 028 353

## Beschreibung

Die Erfindung betrifft ein System zum Erfassen und Bewerten bedienungsabhängiger Vorgänge und/oder Komponenten in automatisierten Produktions- und Prüfabläufen.

In Produktionsprozessen werden im Verfahrensablauf oder an fertigen Bauteilen bzw. Komponenten zur Qualitätssicherung meist periodisch Meßwerte aufgenommen, wobei jeder Meßwert einzeln erfaßt und daraufhin geprüft wird, ob er innerhalb eines vorgegebenen Toleranzintervalls liegt. Die Vorgabewerte für die Intervalle werden beispielsweise dadurch bestimmt, daß manuell hergestellte Prototypen vermessen und anschließend produktionsabhängige Toleranzbereiche festgelegt werden.

Bei einem z.B. aus DE-A1-199 62 967 bekannten Verfahren werden zur Qualitätsüberwachung im Fertigungsprozeß Meßwerte aufgenommen und mit definierten Prozeßgrenzen verglichen. Bei Überschreibung dieser Grenzen wird ein Fehlersignal erzeugt, um das betreffende Produkt als "nicht in Ordnung" aussondern zu können. Die Berechnung der Prozeßgrenzen erfolgt mit Hilfe der Standardabweichung von zuvor während einer Einlernphase aufgenommenen Meßwerten, d.h. auf statistischer Basis, damit man die Prozeßgrenzen an die speziellen Gegebenheiten verschiedener Produktionsprozesse anpassen kann.

Ein wesentlicher Nachteil dieser bekannten Systeme bzw. Verfahren besteht darin, daß bereits eine einzige Abweichung eines Meßwerts vom vorgegebenen Toleranzbereich ausreicht, um das betroffene Produkt als "nicht in Ordnung" auszusondern. Bei komplexen Erzeugnissen mit vielen Messwerten ist jedoch die Wahrscheinlichkeit eines Fehlers sehr hoch, weil allein schon die zufällige Schwankung eines Prozessparameters zu einer Abweichung über eine Toleranzgrenze hinaus führen kann, obwohl ein solcher "Fehler" einem menschlichen Betrachter am Endprodukt vielleicht gar nicht auffallen würde. Daher führt die stringente Überwachung von Sollwerten oft zu sehr hohem Ausschuss, was unwirtschaftlich ist und sich negativ auf die Produktionskosten auswirkt.

Um dem zu begegnen schlägt beispielsweise DE-A1-101 22 824 eine Methode zur Beurteilung von Prozessfähigkeit und Prozessleistung vor. Dazu wird eine Grenzkurve definiert, welche die Prozessstreuungsmittellage durch eine Einschränkung von Null-Fehler-Lage und die Verwendung einer statistischen Tolerierung begrenzt. Aus einer Vielzahl von bereits durchgeführten Messungen wird mit Hilfe eines empirischen Ansatzes ein Diagramm erstellt, das eine Grenzlinie enthält. Diese markiert den Null-Fehler-Bereich und dient zur Beurteilung der Prozessleistung. Letztere setzt sich aus Toleranz und Streubreite zusammen. Anschließend definiert man mehrere Bereiche, die verschiedene Prozessleistungsklassen darstellen. Je nach Verhältnis von Toleranz und Streubreite können dann die Messwerte verschiedenen Klassen zugeordnet werden.

US 2003/0028353 A1 offenbart ein System zum Prüfen und Bewerten bedienungsabhängiger, elektronischer Komponenten in automatisierten Produktions- und Prüfabläufen. Ein Roboter ist vorgesehen, welcher mit wenigstens einem Sensor an wenigstens einem Anzeigeelement der zu prüfenden Komponente Messwerte aufnimmt und die Messwerte an ein künstliches neuronales Netz weiterleitet. Das künstliche neuronale Netz führt anhand der Messwerte eine Mustererkennung durch, deren Ergebnisse von einem Expertensystem beurteilt werden. Das Expertensystem trifft Entscheidungen für die weiteren Abläufe und übermittelt der zuständigen Person einen elektronischen Bericht. Bei einem falschen Alarm durch eine Prüfungsanlage kann die Entscheidung anhand von Messwerten anderer Prüfungsanlagen getroffen werden, die Produktion weiterzuführen und die Prüfungsanlage, die den falschen Alarm auslöste, zu kalibrieren.

Problematisch hierbei ist weiterhin, dass ein Kunde die Güte eines Produktes eher in einer Gesamtbetrachtung erfasst, d.h. es wird bewertet, ob ein Endprodukt insgesamt in Ordnung ist. Dies gilt vor allem bei Produkten mit bedienungsabhängigen Vorgängen. Hier kommt es maßgeblich darauf an, dass sich alle vorhandenen Bedienelemente in gleicher Weise hinreichend exakt bedienen lassen. Entscheidend ist meist der Kontext und die Vergleichbarkeit mit anderen Bedienelementen oder Produkten. Zwischen Einzelfunktionen wird nicht differenziert. Mithin können Geräte, die von herkömmlichen Qualitätssicherungssystemen ausgemustert werden, weil einzelne Messwerte nicht den festgesetzten Normen entsprechen, durchaus positiv beim Endkunden ankommen, während Geräte, die mit "in Ordnung" deklariert wurden, dennoch reklamiert werden, weil z.B. die Bedienbarkeit einiger Schalter spürbar unterschiedlich erscheint.

Hinzu kommt, dass Endkunden selten in nur zwei Kategorien (gut - schlecht) denken. Dem Qualitätsurteil liegt regelmäßig eine von subjektiven Empfindungen beeinflusste Bewertungsskala zugrunde, die Begriffe wie z.B. "mittelmäßig", "gut, mit leichten Mängeln", "überdurchschnittlich" kennt. Derartige Bewertungsschemata sind mit den bekannten Qualitätssicherungssystemen automatisiert nicht umsetzbar.

Ziel der Erfindung ist es, ein System zum Erfassen und Bewerten bedienungsabhängiger Vorgänge und/oder Komponenten in automatisierten Produktions- und Prüfabläufen zu entwickeln, das eine automatisierte und differenziertere Qualitätsbewertung in unterschiedlichen Kategorien ermöglicht. Die Qualitätsbewertung soll objektiv reproduzierbar und damit unabhängig von Produktionsstandorten möglich sein, insbesondere zur Sicherstellung gleichbleibender Produktgüte. Ferner soll es möglich sein, die Güte von Bedien- und Anzeigeelementen auch in Relation zu anderen Bedien- und Anzeigeelementen des selben Gerätes bewerten zu können. Angestrebt wird insbesondere, daß durch Roboter erfaßte Meßwerte in mathematisch nachvollziehbarer und damit automatisierbarer Weise bewertet werden, wobei ausgewählte Bewertungskriterien von Kunden in besser geeigneter Form nachzubilden sind.

Hauptmerkmale der Erfindung sind in Anspruch 1 angegeben. Ausgestaltungen sind Gegenstand der Ansprüche 2 bis 35.

Ein erfindungsgemäßes System zum Prüfen und Bewerten bedienungsabhängiger Vorgänge und/oder Komponenten in automatisierten Produktions- und Prüfabläufen hat einen Roboter, der mit wenigstens einem Sensor an wenigstens einem Bedien- und/oder Anzeigeelement der zu prüfenden bzw. zu bewertenden Komponente Meßwerte aufnimmt und an eine Auswerteeinheit weiterleitet. Letztere analysiert und bewertet die Meßwerte anhand definierbarer Qualitätsfunktionen, wobei die Qualitätsfunktionen mittels Operatoren menschliche Bewertungsschemata bzw. -regeln nachbilden und anhand dieser als Bewertungsergebnis wenigstens eine Bewertungsaussage erstellen.

Mit einem solchen Bewertungssystem ist es möglich, in automatisierten Produktions- und Prüfverfahren einen menschlichen Experten zu imitieren, der auf der Grundlage präziser Meßdaten eine Qualitätsbewertung durchführt. Mit Hilfe der Qualitätsfunktionen erfolgt eine formale Abbildung eines Bewertungsschemas, das graduelle Übergänge zwischen den festen Grenzwerten von Kriterien (ja-nein-Entscheidungen) berücksichtigt. Zudem lassen sich kompensatorische Verknüpfungen von Einzelkriterien zu einem Gesamtresultat verarbeiten, nämlich einer Bewertungsaussage. Dadurch können nachvollziehbare und prüfbare Bewertungen automatisiert durchgeführt werden, wobei eine einfache Einteilung in Qualitätsklassen möglich ist. Bewertungskriterien können mit Hilfe von Operatoren und vorgebbaren Parametern unterschiedlich gewichtet werden. Das erfindungsgemäße System ermöglicht mithin, menschliche Bewertungskriterien in objektiver, reproduzierbarer Form zu formalisieren.

Weitere Vorteile des Systems stellen sich wie folgt dar:
▪ Einfacher Entwurf von Qualitätsfunktionen durch komfortable und intuitive Benutzeroberfläche;
▪ Darstellung von Operatorbäumen auf unterschiedlichen Detailstufen;
▪ Grafisch unterstützte Modellierung von Einzelkriterien durch skalierbare arithmetische, statistische und logische Operatoren;
▪ Verarbeitung von Perzeptionen als Erweiterung von Meßwerten.
▪ Lernverfahren zur Anpassung parametrisierter Bewertungsfunktionen an das Verhalten menschlicher Experten;
▪ Data Mining Methoden zur Analyse des Bewertungsprozesses;
▪ Identifizierung kritischer Kriterien, Rückschlüsse auf den Produktionsprozeß;
▪ Erkennen von Fehlerquellen bei Qualitätsabweichungen.

Das erfindungsgemäße Bewertungssystem zeichnet sich mithin maßgeblich durch folgende Punkte aus:
▪ Gradueller Übergang zwischen "in Ordnung" und "nicht in Ordnung" bei der Gesamtbewertung, so daß differenziertere Qualitätsbeurteilungen in unterschiedlichen Kategorien möglich sind;
▪ Graduelle Übergänge auch bei Einzelkriterien, so daß Toleranzbereiche differenzierter bewertet werden können und die Robustheit gegenüber produktionsbedingten Meßwertverschiebungen erhöht ist;
▪ Interaktivität der Einzelkriterien bei der Gesamtbewertung, so daß die Güte von Elementen auch in Relation zu anderen Elementen bewertet wird;
▪ Möglichkeit zur Kompensation schlechter durch überdurchschnittlich gute Eigenschaften.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung eines Systems zum Erfassen und Bewerten bedienungsabhängiger Vorgänge und/oder Komponenten in automatisierten Produktions- und Prüfabläufen,
- Fig. 2: eine schematische Darstellung einer Auswerteeinheit,
- Fig. 3: eine schematische Darstellung eines Fuzzy Quality Quantifiers,
- Fig. 4: eine schematische Darstellung einer Qualitätsfunktion,
- Fig. 5: eine schematische Darstellung eines Operators,
- Fig. 6: eine schematische Darstellung eines anderen Operators,
- Fig. 7: eine schematische Darstellung eines weiteren Operators und
- Fig. 8: eine schematische Darstellung eines noch anderen Operators,

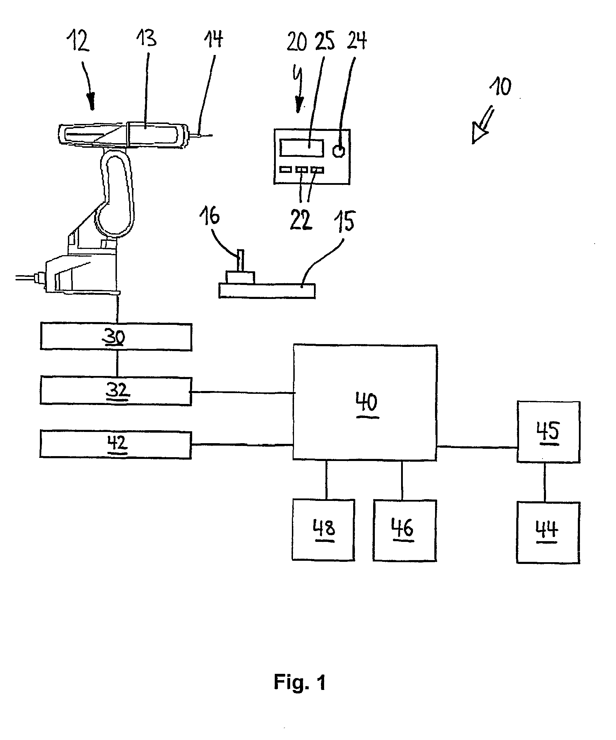

Das in Fig. 1 allgemein mit 10 bezeichnete System zum Prüfen und Bewerten bedienungsabhängiger Vorgänge an Komponenten 20 ist beispielsweise für die automatisierte Qualitätskontrolle von Bedienkonsolen für Autoradios oder Klimaanlagen in Kraftfahrzeugen konzipiert.

Ein Prüfroboter 12 trägt an einem CNC-gesteuerten Roboterarm 13 einen Sensor 14, beispielsweise einen Kraftmesser oder einen Wegmesser, mit dem einzelne Bedien- und/oder Anzeigeelemente 22, 24 an einer Bedienkonsole 20 betätigt werden können, beispielsweise Taster 22 oder Stellregler 24. Auf einer neben dem Roboter 12 angeordneten Konsole 15 können weitere für den Roboterarm 13 greifbare Sensoren 16 oder Werkzeuge abgelegt sein, beispielsweise optische, akustische oder haptische Meßinstrumente. Mit diesen können mechanische, elektrische, haptische, optische und/oder akustische Meßwerte M aufgenommen werden, z.B. Tastgeräusche oder Betriebsgeräusche. Es können aber auch Lautsprecher, Leuchtelemente, Displays oder Oberflächeneigenschaften vermessen werden.

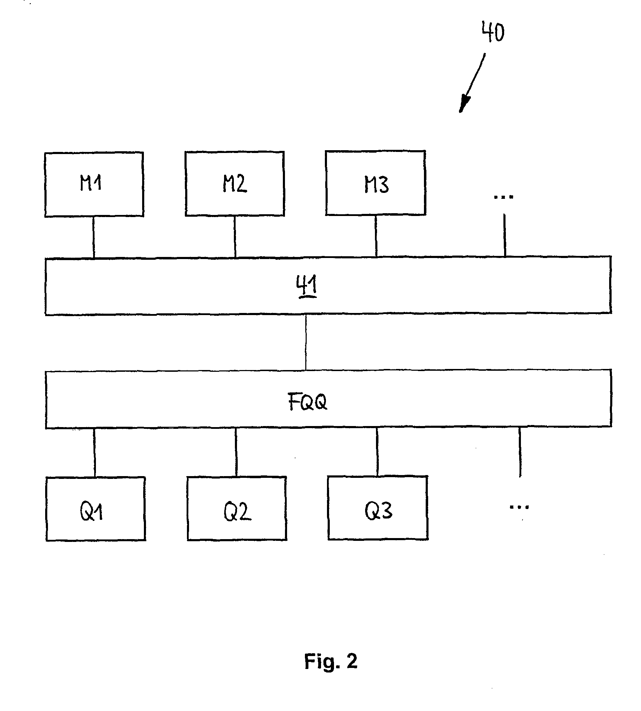

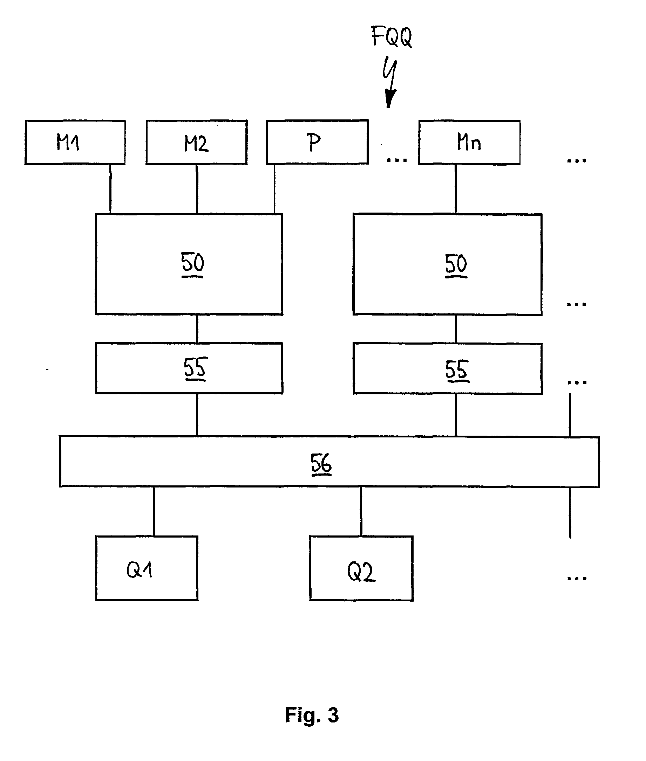

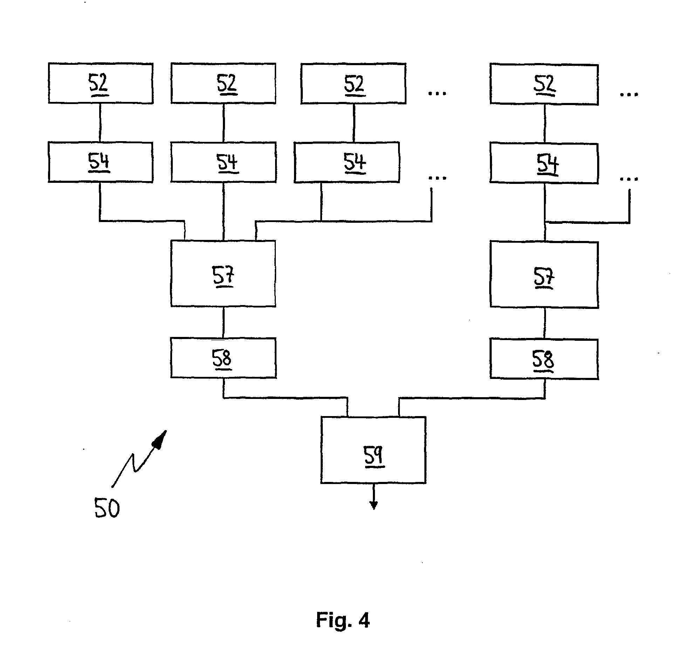

Die von den Sensoren 14, 15 in Abhängigkeit von Betätigungswegen und/oder -winkeln des Roboters 12 und bevorzugt in Echtzeit ermittelten Meßwerte M werden von einer elektronischen Meßwerterfassung 30 erfaßt, mittels einer weiteren elektronischen Schaltung 32 digitalisiert und anschließend an eine zentrale Auswerteeinheit 40, vorzugsweise einen Computer, weiterleitet, der die Meßwerte M anhand definierbarer Qualitätsfunktionen 50 analysiert und bewertet (siehe Fig. 2 und 3). Die Qualitätsfunktionen 50 bilden mittels Operatoren 52 menschliche Bewertungsschemata bzw. -regeln nach. Anhand dieser wird als Bewertungsergebnis wenigstens eine Bewertungsaussage erstellt (siehe Fig. 4), wobei die Ergebnisse bevorzugt als Wohlfühlfaktoren verschiedenen Qualitätsklassen Q1, Q2, Q3 zugeordnet werden. Ergänzend oder alternativ kann man auch einen Index erstellen, der als Ergebnis eine ganzheitliche Produktbewertung repräsentiert.

An den Computer 40 ist wenigstens ein Speicher 42 angeschlossen, der die ermittelten Meßwerte M sowie weitere Daten und/oder Zwischenergebnisse speichert. Über ein Eingabegerät 44, vorzugsweise eine Tastatur oder eine Maus, können die Qualitätsfunktionen 50 erstellt, die entsprechenden Operatoren 52 ausgewählt sowie Konstanten, Parameter 54, 55 und/oder weitere Daten in das System 10 eingegeben werden. Die Visualisierung erfolgt vorzugsweise über einen Editor 45, der auf einem (nicht näher dargestellten) Bildschirm darstellbar ist. Mit einem Ausgabegerät 46, vorzugsweise einem (weiteren) Bildschirm oder einem (ebenfalls nicht gezeigten) Drucker, können die Bewertungsergebnisse bzw. Bewertungsaussagen visualisiert werden. Man kann die Daten aber auch über eine Schnittstelle 48 an einen externen Speicher, einen weiteren Computer, z.B. ein Notebook, oder ein Netzwerk weiterleiten.

Innerhalb der Auswerteeinheit 40 werden - wie in Fig. 2 schematisch dargestellt - mittels einer Selektionseinheit 41 Meßwerte M1, M2, M3 ausgewählt und anschließend mittels einer Softwareeinheit FQQ analysiert und bewertet. Letztere wird im wesentlichen von den Qualitätsfunktionen 50 gebildet, die eine hierarchische Struktur nachbilden (siehe Fig. 3) und bevorzugt in Form eines Operatorbaums darstellbar sind. Letzterer ist über den Editor 45 individuell erstellbar. Er umfaßt verschiedene auswählbare und vorgebbare Operatoren 52, so daß die Softwareeinheit FQQ nicht nur eine dichotome Qualitätsbewertung vornimmt, sondern eine graduelle stetige Qualitätsbewertung, die mit Hilfe der Operatoren 52 und der definierbaren bzw. vorgebbaren Gewichtungs-Parameter 54, 55, 58, G an eine menschliche Vorgehensweise angelehnt wird.

Den prinzipiellen Aufbau der Softwareeinheit FQQ zeigt Fig. 3. Eine Qualitätsfunktion 50 ist stets eine Abbildung, die einem Objekt ω bzw. einem zugehörigen Vektor x = x(ω) = (x1 ... xn), bestehend aus n Meßwerten M, einen Wert einer abstrakten Menge G von "Gütekriterien" zuordnet: Q: X1 x ... x Xn → G, wobei Xi der Wertebereich des i-ten Meßwertes M ist. Die Ausgabe Q(x) wird interpretiert als "unscharfer" (mehrwertiger) Wahrheitswert der Aussage, das zu bewertende Objekt habe optimale Qualität. Speziell weisen daher Q(x) = 0 und Q(x) = 1 auf eine völlig inakzeptable oder eine optimale Qualität hin.

Jede definierte Qualitätsfunktion 50 wird nun mittels der Parameter 55 gewichtet. Diese Werte werden von einer Bewertungsfunktion 56 erfaßt und zu einem Gesamtergebnis zusammengefaßt. Dieses kann dann den Qualitätsklassen Q1, Q2, Q3 zugeordnet, als Wohlfühlfaktor definiert und/oder in Form eines Index ausgegeben werden.

Anstelle von Meßwerten M kann man allgemeiner auch sogenannte Perzeptionen P als Argumente der Qualitätsfunktionen 50 zulassen. Dies erlaubt beispielsweise Eingaben wie "hellblau" oder "etwas zu klein", die nicht von einem Sensor 14, 16, sondern von einem menschlichen Betrachter erfaßt werden, beispielsweise durch visuelle Inspektion. Solche Werte können in Form unscharfer Mengen (Fuzzy Sets) modelliert werden.

Wie Fig. 4 näher zeigt, wird jede Qualitätsfunktion 50 von mehreren Operatoren 52 gebildet, die zu Gruppen zusammengefaßt und innerhalb einer Qualitätsfunktion 50 mittels Parametern 54 relativ zueinander gewichtbar und/oder gewichtet sind. Ein weiterer Operatorknoten 57 führt anhand der vorgenommenen Gewichtung eine Bewertung durch und leitet die Ergebnisse an eine weitere Bewertungsfunktion 59 weiter, die anhand einer zuvor definierten weiteren Gewichtung 58 alle Kriterien zu einer Gesamtentscheidung zusammenfaßt.

Man erkennt, daß die unteren Operatoren direkt auf den Meßwerten M bzw. den Perzeptionen P aufbauen und durch die Funktionen 57 der Form πj : X1 x ... x Xn → [0,1] zu einer Beurteilung führen, repräsentiert durch einen Wert aus dem Einheitsintervall [0,1]. Das Ergebnis dieses Schrittes kann dann interpretiert werden als Wahrheitswert der Aussage "Kriterium wurde vollständig erfüllt".

In weiteren Schritten werden diese gewichteten Einzelbewertungen dann durch die Funktionen 59 vom Typ A: [0,1]^{j} → [0,1] zu einem Gesamtergebnis zusammengefaßt.

Jede Qualitätsfunktionen 50 ist damit Teil einer hierarchischen Strukturierung, die durch Untergliederung in Einzelbewertungen die Gestaltung auch komplexer Qualitätsfunktionen 50 vereinfacht. Da die Bewertung eines Objektes 20 im allgemeinen unterschiedliche Kriterien berücksichtigt, die selbst wieder in Unterkriterien zerlegt werden können, werden die Qualitätsfunktionen 50 als Zusammenschluß hierarchisch organisierter Sub-Entscheidungen dargestellt. Angefangen mit kleineren Kriterien bis hin zu immer umfassenderen Entscheidungen lassen sich die Qualitätsfunktionen 50 auf intuitive Art wesentlich vereinfacht nachbilden.

Das erfindungsgemäße System 10 unterstützt diesen hierarchischen Entwurf, indem es eine grafische Benutzungsoberfläche 45 zur Verfügung stellt, die es erlaubt, die Qualitätsfunktionen 50 in Form einer Baumstruktur zu beschreiben und zu parametrisieren. Teilbäume können dabei zur besseren Übersicht zu Einzelknoten zusammenfaßt werden. Formal stellt sich die Qualitätsfunktion 50 damit als ein Operatorbaum dar, wobei jeder Knoten des Baumes einem Operator 52 entspricht. Die Nachfolger eines Knotens 52 liefern die Eingabeargumente des entsprechenden nachfolgenden Operators 57, 59.

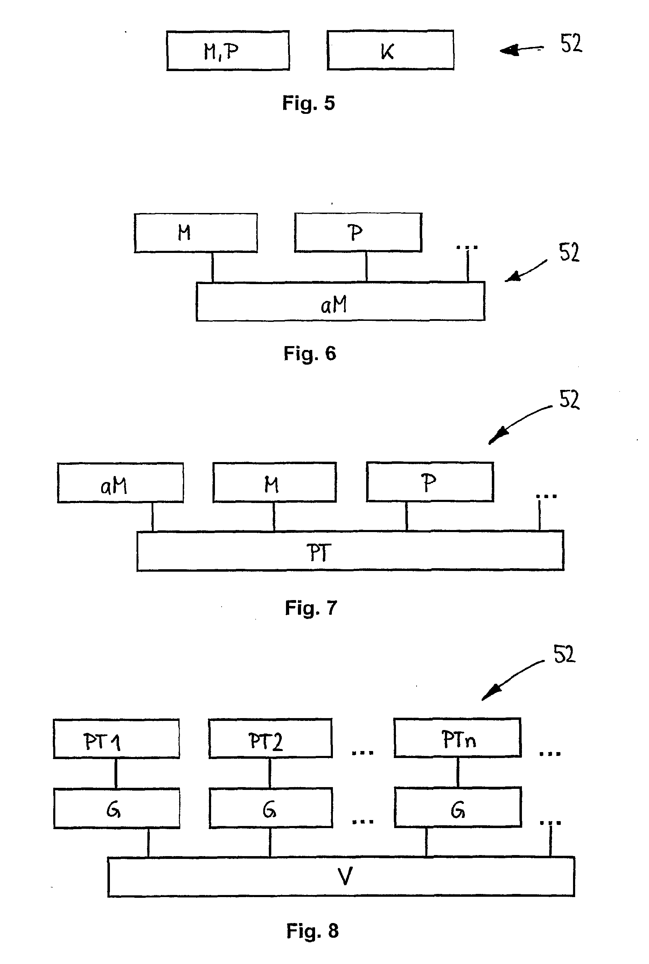

Die Fig. 5 bis 8 zeigen verschiedene Typen von Operatoren 52.

Im einfachsten Fall wird der Operator 52 von einem Meßwert M oder einer Konstante K repräsentiert (Fig. 5). Meßwerte M sowie definierbare Konstanten K bilden daher die unterste Eingabeschicht. Als Eingabequelle der Meßwerte M kommen die von den Robotersensoren 14, 16 gemessenen Werte in Frage. Es kommen aber auch andere Eingabequellen in Betracht, wie z.B. direkte Roboter-Computer-Anbindungen oder Datenbanken.

Wie bereits erwähnt, kommen darüber hinaus auch allgemein Perzeptionen P als Input in Frage. Dies erlaubt beispielsweise Eingaben, die nicht von einem Sensor sondern nur von einem menschlichen Betrachter erfaßt werden können. So könnten z.B. visuelle Inspektionen mit Werten wie "hell" oder "etwas zu dunkel" in Form unscharfer Mengen verarbeitet werden.

Die Verknüpfung von Meßwerten M und/oder Perzeptionen P führt zu sogenannten abgeleiteten Meßwerten aM, Hierbei handelt es sich beispielsweise um einen Mittelwert, der aus mehreren Meßwerten gewonnen wird (Fig. 6).

Neben den arithmetischen Standardoperatoren (Addition, Multiplikation, etc.) können auch komplexere Operatoren verwendet werden. Diese lassen sich auch auf Wahrheitswerte anwenden, da diese im Prinzip auch reelle Zahlen darstellen. Dies ermöglicht damit eine weitere Verschachtelung der Operatoren 52, wobei zu beachten ist, daß die Verknüpfung von Wahrheitswerten nur in Ausnahmefällen wieder einen Wahrheitswert ergibt (die Operatoren 52 passen daher ihre Ausgabeart den zu erwartenden möglichen Ausgaben dynamisch an).

Um darüber hinaus weitere Flexibilität zu ermöglichen, wäre zudem ein Operator 52 denkbar, der mittels eines Formelinterpreters auch vom Benutzer selbst frei definierbare komplexere Operatoren ermöglichen würde. Beispielsweise indem mehrere verknüpfte Operatoren 52 zu einem einzelnen neuen Operator zusammengefaßt werden.

Die Prädikate PT - wie sie in Fig. 7 schematisch dargestellt sind -dienen zur Bewertung von Meßwerten M und/oder Perzeptionen P selbst bzw. daraus abgeleiteter Meßwerte aM. Als Eingabe werden reelle Zahlen erwartet; es können aber auch Wahrheitswerte miteinander in Beziehung gebracht werden. Die Ausgabe ist stets ein Wert aus dem Intervall [0,1], der den unscharfen Wahrheitswert der Aussage "Prädikat wurde vollständig erfüllt" widerspiegelt.

Als einstelliges Prädikat PT wird beispielsweise eine (Fuzzy-) Intervallprüfung realisiert, die in direkter Weise eine Zugehörigkeitsfunktion in einem parametrisierbaren Operator 52 zusammenfaßt. Dieser dient dazu, Meßwerte M daraufhin zu überprüfen, ob sie innerhalb eines bestimmten Bereiches liegen. Die Ausgabe aus dem Intervall [0,1] gibt dann an, zu welchem Grad der übergebene Wert innerhalb des Intervalls liegt.

Die Überprüfung kann dabei auf verschiedene Arten erfolgen:
1. Überprüft wird, ob der übergebene Wert M genau einem bestimmten angegebenen Wert entspricht. In diesem Fall ist der Ausgabewert gleich 1, sonst 0.
2. Es erfolgt eine Intervall-Prüfung. Die Ausgabe ist 0 oder 1, je nachdem ob für den übergebenen Wert M die Aussage "M ∈ [a,b]" gilt oder nicht. a und b stellen dabei die parametrisierbaren Intervallgrenzen dar.
3. Die Intervall-Zugehörigkeit wird anhand einer Trapez-Funktion berechnet. Aufgrund der unscharfen Grenzen können alle Werte aus dem Intervall [0,1] als Grad der Zugehörigkeit angenommen werden.
4. Die Intervall-Zugehörigkeit wird anhand einer PI-Funktion berechnet. Auch dies stellt eine unscharfe Zugehörigkeitsfunktion dar, die aber mehr fließende Übergänge als die Trapez-Funktion besitzt.

Neben einem einfachen einstelligen Prädikaten PT können auch zweistellige Prädikate definiert werden, beispielsweise Relationen.

Die in Fig. 8 schematisch gezeigte logische Verknüpfung V ist vorzugsweise eine Konjunktion, wobei z.B. mehrere Prädikate P1, P2, P3 über Gewichtungsparameter G zu einer logischen Verknüpfung V zusammengefaßt werden. Dies bewirkt z.B., daß das Erfüllen eines vorgegebenen Kriteriums das Erfüllen aller Unterkriterien erfordert. Die mehrwertige Logik bietet eine Reihe von verallgemeinerten Konjunktionen. Entspricht beispielsweise die Menge der Wahrheitswerte dem Einheitsintervall [0,1], so kommen sogenannte T-Normen als Operatoren 52 in Betracht. Beispiele solcher T-Normen sind der Minimum-Operator und die Lukasiewicz T-Norm. Ergänzend oder alternativ kann man als Operator 52 auch eine Disjunktion in Form von T- und S-Normen verwenden.

Alternativ oder ergänzend können neben den rein konjunktiven Operatoren auch kompensatorische Operatoren vorgesehen sein. Hierdurch könnte man z.B. ein weniger gut erfülltes Unterkriterium durch ein gut erfülltes Unterkriterium zu einem gewissen Grad kompensieren. Ein einfaches Beispiel für einen solchen Operator ist das arithmetische Mittel oder kompensatorische min-max-Mischnormen.

Stets kann der Benutzer durch Einstellen eines der Parameter 54, 55, 58, G auf einfache Weise bestimmen, wie "streng" er bei der Bewertung eines Kriteriums vorgehen möchte, d.h. er kann den Grad der Kompensation selbst festlegen. Zudem besteht die Möglichkeit, einzelne Unterkriterien bezüglich ihrer Relevanz zu gewichten (siehe Fig. 4).

Das erfindungsgemäße System 10 ist bestrebt, dem Anwender das intuitive Zusammenstellen von Qualitätsfunktionen 50 zu ermöglichen. Statt dem Benutzer daher wenig verständliche Aggregationsoperatoren 52 direkt anzubieten, bzw. diese sogar von ihm selbst definieren zu lassen, gestaltet sich die Wahl des passenden Aggregationsoperators intuitiv, indem z.B. im Editor 45 mittels eines (nicht gezeigten) Schiebereglers die Strenge bzw. der Kompensationsgrad des Operators 52 gewählt werden kann. Durch einfaches "Verschieben" wählt der Benutzer somit, wie "streng" er bei der Bewertung eines Kriteriums sein möchte.

Zudem läßt sich die Relevanz von Unterkriterien einstellen, indem ihre Gewichtung 54, 55, 58, G gegenüber anderen entweder erhöht oder abgesenkt wird.

Um mehrere Aggegationsoperatoren zu einem Operator zu kapseln, vermittelt das System 10 je nach Stellung eines Schiebereglers intern zwischen folgenden Aggregationsoperatoren:
▪ Als extremste Konjunktion bzw. Disjunktion werden die drastische sowie schwach-drastische T- und S-Norm angeboten.
▪ Mit der Lukasiewicz T- bzw. S-Norm als untere Grenze beginnt die sogenannte Yager-Klasse als parametrisierter Operator. Mit Verschiebung des Schiebereglers wird der Parameter der Yager-Klasse exponentiell erhöht, um so schnell zwischen kleinen und großen Parametern zu vermitteln und dadurch ein breites Spektrum an von der Yager-Klasse erzeugten Normen anzubieten.
▪ Da die Yager-Klasse gegen Minimum und Maximum konvergiert, nähert sich die Parametrisierung relativ gut dem nun folgenden Fuzzy-Und und Fuzzy-Oder an, die den größten Bereich des Schiebereglers für sich in Anspruch nehmen und deren Schnittstelle das arithmetische Mittel darstellt. Fuzzy-Und und Fuzzy-Oder werden als kompensatorische Operatoren eingesetzt, weil sie auf einfache Weise nahtlos zwischen Minimum und Maximum vermitteln.

Alternativ können auch sogenannte OWA-Operatoren verwendet werden, da sich mit diesen auch linguistische Vorgaben wie z.B. "die meisten" und "fast alle" auf intuitiv bedienbare Weise umsetzen lassen. Die "Ordered Weighted Averaging Operators" (OWA, zu deutsch "geordnete, gewichtete Durchschnitts-Operatoren") wurden 1988 von Yager vorgeschlagen. Sie gehören zur Klasse der Min-Max-Mischnormen, kompensieren also zwischen Minimum und Maximum.

Eine konkrete Umsetzung des erfindungsgemäßen Systems 10 stellt sich beispielsweise wie folgt dar:
Bei neuen Automodellen erhält normalerweise auch das Interieur inklusive der Bedienkonsolen für Autoradio und Klimaanlage ein neues Design. Immer stärker wird dabei auf das harmonische Zusammenspiel sämtlicher Bedienelemente untereinander geachtet. Dabei erfahren nicht selten selbst einzelne Bedienelemente, wie Tasten und Schalter bei neuen Automodellen eine komplette Neuentwicklung. Wichtig ist daher, daß der nach langen Designstudien an einzelnen Prototypen gewonnene Gesamteindruck auch bei der Produktion erhalten bleibt.

In dem vorliegenden Beispiel wird die Bedienkonsole 20 einer Klimaanlage bewertet, wie sie in Fig. 1 schematisch veranschaulicht dargestellt ist. Die Konsole 20 umfaßt mehrere Taster 22, einen Drehknopf 24 zur Wärmeregulierung sowie ein LCD-Display 25.

Zur Qualitätsüberprüfung werden mit den Sensoren 14, 16 Meßwerte M bzw. Meßkurven der Taster 22 sowie des Drehknopfes 24 aufgenommen.

Um die Tasten 22 zu überprüfen, drückt der Meßroboter 12 diese bis zu einer vorgegebenen Schwellenkraft und fährt anschließend zurück, so daß die Tasten 22 wieder ihre Ausgangsposition erreichen. Der Kraft-Weg-Verlauf aller Taster 22 wird in beiden Bewegungsrichtungen erfaßt. Die Meßwerte M werden mittels der elektronischen Schaltung 32 digitalisiert und von der Auswerteeinheit 40 in einer Meßreihe im Speicher 42 abgelegt.

Die von der Auswerteeinheit 40 durchgeführte Analyse der Meßreihen ermittelt die Position des ersten Kraftanstiegs, die Endposition des Kraftverlaufs sowie Wert und Position der maximalen Kraft, die notwendig ist, um einen Taster 22 zu betätigen.

Der Temperaturregler 24 wirkt z.B. zu beiden Seiten hin als Schalter, wobei Federn ihn stets wieder in seine Ausgangsposition zurückziehen. Die Temperatur kann daher nicht an der Stellung des Schalters abgelesen werden, sondern wird durch die Dauer reguliert, mit der man den Drehknopf 24 betätigt. Der jeweils aktuell eingestellte Wert wird im Display 25 angezeigt. Eine Drehung nach links bewirkt eine Temperaturabsenkung, nach rechts eine Temperaturerhöhung.

Der Drehmomentverlauf, der bei der Drehung des Temperaturreglers 24 gemessen wird, ähnelt in seiner Struktur dem Kraftverlauf, der bei einer Tasterbetätigung beobachtet wird. Tatsächlich entspricht daher der Analysealgorythmus im Wesentlichen dem der Taster 22.

In der bisherigen Qualitätsbewertung würde man für alle relevanten Meßpunkte M getrennt ermittelt, ob sie innerhalb einer produktionsabhängig zugelassenen Toleranz den Vorgabewerten entsprechen. Weicht nur einer der Meßpunkte M über die Toleranzgrenze hinausgehend ab, würde man das Gerät 20 ausmustern bzw. manuell überprüfen und ggf. nachbessern.

Mit dem erfindungsgemäßen System hingegen besteht die Möglichkeit, die Bedienkonsole 20 anhand von definierbaren Regeln zu bewerten, nach denen auch ein menschlicher Gutachter eine Bewertung vornehmen würde. Diese Regeln können beispielsweise wie folgt lauten:
- R1: Der Schaltpunkt an den Tastern 22 sollte deutlich spürbar sein, aber nicht "wackelig" wirken;
- R2: Das "Feeling" aller Taster 22 sollte gleich sein;
- R3: Nach dem merklichen Kraftanstieg sollte bald der Schaltpunkt am Temperaturregler 24 kommen;
- R4: Taster 22 und Temperaturregler 24 sollen harmonisieren.

Für eine Quantifizierung der Aussage R1 wird zunächst experimentell ermittelt, was "deutlich spürbar" und was "wackelig" bedeutet.

Nach dem Weberschen Gesetz gilt in weiten Bereichen der Empfindung, daß die physiologische Unterschiedsschwelle, d.h. der Reizunterschied, der notwendig ist, um gerade noch empfunden zu werden, proportional zum relativen Reizzuwachs ist. Je schwergängiger daher ein Taster 22 ist, um so ausgeprägter sollte daher auch der Kraftabfall beim "Klick" sein, um als "deutlich spürbar" empfunden zu werden.

Da das Gehirn den Verlauf des Kraftanstiegs "hochrechnen" wird und auch andere Faktoren eine Rolle dabei spielen, wie der Bediener den Schaltpunkt konkret empfindet, wird die Qualitätsbewertung, keine absoluten Meßpunkte berücksichtigen, sondern den bezüglich der Leichtgängigkeit des Tasters 22 relativierten Kraftabfall bewerten. Dabei wird der Übergang zwischen einem "deutlich spürbaren, nichtwackeligen" und einem "wackeligen" bzw. "kaum spürbaren" Schaltpunkt nicht abrupt, sondern fließend sein.

Die automatisierte Bewertung, wie "angenehm" ein Mensch den Schaltpunkt empfinden würde, wird mithin über die Qualitätsfunktionen 50 und mit Hilfe der Operatoren 52 als Fuzzy-Intervall über dem relativierten Kraftabfall nachmodelliert, wobei die Parameter 54, 55 des Fuzzy-Operators zudem von der konkreten Tasterart abhängen können. Als Referenz eines "angenehmen" Tasters wird beispielsweise derjenige aus einer Meßreihe bestimmt, der sämtliche Gütekriterien optimal erfüllt. Ferner wird angenommen, daß jeweils bei einer 30%igen Zu- oder Abnahme des Referenz-Wertes die Schaltstärke als "nicht mehr angenehm" empfunden wird, während Meßwerte mit 1 % Abweichung noch als "sehr angenehm" einzustufen sind.

Damit das "Feeling" aller Taster 22 übereinstimmt (Aussage R2), sollten sich sämtliche Meßwerte M der Schalter 22 untereinander gleichen.

Mit dem erfindungsgemäßen System 10 läßt sich diese Überprüfung nachstellen, indem z.B. jeweils die statistische Spannweite der relevanten Kenngrößen aller Taster 22 berechnet wird. Bei einem "etwa gleichen Feeling" sollten die jeweiligen Spannweiten möglichst bei Null liegen, was wieder mittels eines Fuzzy-Intervalls "Etwa Null" überprüft werden kann. Die Einzelüberprüfungen der Spannweite werden dann mittels eines Aggregationsoperators 52, der leicht kompensatorisch eingestellt ist, untereinander verrechnet, damit die gute Übereinstimmung in einer Kenngröße die andere ausgleichen kann.

Die Aussage R3 beinhaltet zwei Überprüfungen. Zum einen verlangt die Regel, daß es sich um einen "merklichen" Kraftanstieg handeln soll. Zum anderen soll der Schaltpunkt "bald" folgen.

Beide Aussagen lassen sich, wie bei der Aussage R1 als Fuzzy-Intervalle über relativen Werten nachmodellieren. Der "merkliche Kraftanstieg" wird geprüft, indem die Steigungsänderung des Kraftverlaufs zur vorangegangenen Steigung in Relation gesetzt und für diesen Wert dann wieder mittels eines Fuzzy-Intervalls der "Grad der Optimalität" geprüft wird. Das "baldige Folgen" des Schaltpunkts wird entsprechend modelliert, indem die Winkeldifferenz der Drehbewegung zur Differenz zwischen dem Federumschaltpunkt und der ersten Ausgangswinkelstellung in Relation gesetzt wird. Dieser Wert wird dann mittels eines "Fuzzy-Kleiner"-Operators 52 bezüglich einer oberen Grenze oder aber wiederum durch ein "Fuzzy-Intervall" bezüglich einer "Optimaldrehung bis zum Schaltpunkt" bewertet.

Bei der Bewertung der Aussage R4 kommen sämtliche Vorteile des Systems 10 zum tragen, weil dies mit herkömmlichen Methoden nicht möglich wäre.

Ein Taster 22 und der Temperaturregler 24 werden sicher dann nicht miteinander harmonisieren, wenn ein als optimal empfundener Taster 22 zusammen mit einem weniger optimal empfundenen Temperatursteller 24 in einem Gerät 20 eingebaut ist. Ein Bewertungskriterium besteht mithin darin daß der Grad, mit der die Aussage R3 zutrifft mit dem Grad, mit dem die Aussage R1 zutrifft, übereinstimmen sollte, was sich durch eine "Fuzzy-und"-Verknüpfung beider Werte bewerkstelligen läßt.

Alternativ oder ergänzend könnten sowohl die Taster 22 als auch der Temperatursteller 24 bezüglich ihrer Leichtgängigkeit bewertet werden, indem für beide Arten mittels dreier Operatoren 52 jeweils der Grad der Aussagen "ist leichtgängig", "besitzt mittlere Gängigkeit", und "ist schwergängig" bewertet würde. Durch diese drei Operatoren 52 (z.B. ein "Fuzzy-Kleiner", ein "Fuzzy-Intervall" und ein "Fuzzy-Größer"-Operator) würden die Bedienelemente 22, 24 dann bezüglich ihrer Gängigkeit kategorisiert.

Der Grad der Zugehörigkeit des Temperaturstellers 24 zum "Schwergängig"-Operator müßte für eine harmonische Bedienbarkeit der Klimaanlage 20 dann dem Grad der Zugehörigkeit der Taster 22 zu deren "Schwergängig"-Operatoren übereinstimmen, weshalb die Operatoren 52 dann mittels eines "Fuzzy-Gleich"-Operators miteinander verglichen werden könnten. Ebenso müßten jeweils ihre "Mittel"- und "Leichtgängig"-Operatoren untereinander übereinstimmen.

Ferner könnte man auch sämtliche "Schwergängig"-Operatoren durch einen T-Norm-Aggregationsoperator miteinander verknüpfen, um so den Grad der Zugehörigkeit zu der Aussage "Gerät ist insgesamt schwergängig" zu ermitteln. Wird hier ein Wert nahe 1 erreicht, läßt sich das Gerät 20 als "in sich harmonisch schwergängig" beschreiben. Äquivalente Aussagen ergeben sich, wenn hohe Werte bei der Verknüpfung der "Mittel"- und "Leichtgängig"-Operatoren erreicht werden. Erreichen dagegen alle drei Gesamtverknüpfungen der jeweiligen Operatoren 52 eher kleine Werte, besagt dies, daß das Gerät 20 in sich nicht harmonisch aufgebaut ist, weil die Bedienelemente 22, 24 sich in ihrer Bedienbarkeit zu sehr unterscheiden.

Um eine Gesamtaussage über die Güte der Klimaanlage 20 zu erhalten, werden die Einzelbewertungen der Aussagen R1 bis R4 abschließend mit einem Aggregationsoperator 52 verknüpft, der die Einzelbewertungen dann zu einer Gesamtbewertung zusammenfaßt. Diese kann in Form eines Wohlfühlfaktors dargestellt werden, wobei jedem Gerät 20 ein entsprechender Wert zugeordnet wird. Oder man erstellt einen Index, mit dessen Hilfe die einzelnen Geräte in definierte Bewertungs- bzw. Qualitätsklassen Q1, Q2, Q3 eingeteilt werden.

Die Gesamtaussage könnte - je nach Einstellung des Aggregationsoperators 52 - mehr oder weniger streng ausfallen, so daß z.B. gut erfüllte Teilkriterien auch weniger gut erfüllte kompensieren könnten. Einzelbewertungen wären zudem bezüglich ihrer Relevanz zu gewichten. So dürfte die harmonische Bedienbarkeit aus der Aussage R4 sicher wichtiger sein, als z.B. der Kraftanstieg eines einzelnen Reglers aus der Aussage R3.

Man erkennt, daß aufgrund der rekursiven Aufspaltung einer Fragestellung in kleinere Teilkriterien, z.B. die Aussagen R1 bis R4, die einzeln bewertet und dann Stück für Stück zu einer Gesamtbewertung zusammengefügt werden, auch komplexe Qualitätsbewertungen relativ einfach nachstellen lassen. Zentrale Basis hierfür ist der hierarchische Operatorbaum, der von den Qualitätsfunktionen 50 gebildet wird.

Die Erfindung ist nicht auf eine der vorbeschriebenen Ausführungsformen beschränkt, sondern in vielfältiger Weise abwandelbar.

So können die Qualitätsfunktionen 50 selbstadaptierend gestaltet sein. Ein Experte könnte dazu die Struktur der Qualitätsfunktion 50 vorgeben, während das System 10 die möglichen Parameter 54, 55, 58, G anhand von Beispielbewertungen selbständig modifiziert, um so zu einer möglichst realitätsnahen Imitation menschlicher Entscheidungen zu kommen.

Das System 10 würde die "korrekten" Qualitätsfunktionen 50 also quasi erlernen. Durch Vorgabe einer streng definierten Qualitätsfunktion 50 wären dann aber, anders als z.B. beim komplett selbstorganisierenden Lernen durch z.B. sogenannte Neuronale Netze, die Kriterien zur Entscheidungsfindung objektiv nennbar und könnten von menschlichen Experten weiterhin modifiziert werden.

Die Bewertung der Qualitätsfunktionen 50 kann mithin prinzipiell auch mittels einer Fuzzy-Klassifikation, mittels ein- oder mehrdimensionaler Schwellwertverfahren oder mittels eines neuronalen Netzwerkes erfolgen.

Ansätze zu lernfähigen Fuzzy-Systemen finden sich in sogenannten hybriden Systemen, die z.B. die Vorteile von Fuzzy-Systemen mit der Lernfähigkeit neuronaler Netze zu kombinieren suchen.

Man erkennt, daß das erfindungsgemäße System 10 nicht nur die Möglichkeit bietet Meßwerte zu erfassen und auszuwerten, sondern überdies eine Harmonie zwischen Bedienelementen 22, 24 einer Komponente 20 zu ermitteln und nach objektiven Gesichtspunkten zu bewerten. So wird beispielsweise vom System 10 ein hoher Qualitätswert (Wohlfühlfaktor) vergeben, wenn die Taster eines Autoradios auf annähernd gleiche Kraft reagieren. Der Anwender empfindet dies - unabhängig von der Absolutkraft, die zur Schalterbetätigung notwendig ist - als harmonisch. Bei Abweichung eines einzelnen Schalters von seiner Umgebung wird dieser als "schwergängig" oder "zu leichtgängig" empfunden. Das System 10 ist mithin in der Lage dies zu erkennen.

Grundlage bildet bevorzugt ein Operatorbaum, der mit Hilfe des Editors 45 beliebig gestaltet werden kann. So kann man bei Bedarf die Harmonie aller Taster 22 innerhalb eines Gerätes 20 ebenso definieren wie die Harmonie aller Bediengeräte innerhalb eines Fahrzeugs, z.B. bezogen auf die Bedienkräfte aller Schalter 22 oder die Erscheinung der Nachtbeleuchtung aller Bedienelemente. Hierbei findet stets eine Verknüpfung der Qualitätsbewertung der Einzelkomponenten mit dem definierten "Harmoniefaktor" statt, was bisherige Systeme nicht leisten können.

Das System 10 ermittelt damit einen Qualitätsgrad in Anlehnung an die menschliche Vorgehensweise bei der Bewertung der Qualität eines erzeugten Produkts. Einzelne Kriterien können definiert, gewichtet und miteinander verknüpft werden, wobei zudem sogenannte KO-Kriterien einfließen können. Hierzu werden Qualitätsfunktionen 50 erstellt, die von einzelnen gewichtbaren Operatoren 52 gebildet werden und selbst mittels Parametern 54, 55, 58, G in eine Hierarchie eingebunden werden. Damit kann nicht nur die Qualität eines einzelnen Gerätes 20 ermittelt werden, sondern zudem auch das Zusammenspiel oder die Harmonie mehrerer Geräte, die in beispielsweise in einem Fahrzeug-Cockpit angeordnet sind.

Das erfindungsgemäße System ermöglicht mithin:
▪ den Vergleich von Produktionsergebnissen verschiedener Zeiträume oder verschiedener Produktionsstandorte;
▪ das Nachvollziehen des Qualitätsgrades einzelner Facetten;
▪ eine benutzerfreundliche optimierte grafische und vor allem reproduzierbare Darstellung von Qualitätsmessungen;
▪ eine systematische Suche nach Fehlerquellen in der Produktion, denn der Operatorbaum zeigt auf, welche erfaßten Bedienelemente die Qualität durch welche Parameter nachhaltig beeinflussen;
▪ die Identifikation von Ansatzpunkten zur Steigerung der Qualität;
▪ die parallele Betrachtung mehrerer Qualitätsfunktionen, z.B. mit verschiedenen Toleranzgrenzen oder Gewichtungen;
▪ ein automatisches Online-Produktionscontrolling;
▪ die Früherkennung von Tendenzen, die eine Beeinträchtigung der Qualität zur Folge haben können;
▪ den Harmonieabgleich verschiedener Geräte in einem Fahrzeuginnenraum;
▪ die permanente Anpassung des Operatorbaums an die Bedürfnisse des Anwenders;
▪ die Ermittlung von objektiven Daten und Kriterien.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | | |
|---|---|---|---|---|
| | FQQ | Software (Fuzzy Quality Quantifier) | | |
| | K | Konstante | | |
| | aM | abgeleiteter Meßwert | | |
| | M | Meßwert | | |
| | M1, M2, M3 | Meßwert | | |
| | G | Gewichtung / Parameter | | |
| | P | Perzeption | | |
| | PT | Prädikat | | |
| | PT1, PT2 | Prädikat | | |
| | Q1, Q2, Q3 | Qualitätsklasse | | |
| | V | logische Verknüpfung | | |
| | | | | |
| 10 | Prüf- und Bewertungssystem | | 46 | Ausgabegerät |
| 12 | Roboter | | 48 | Schnittstelle |
| 13 | Roboterarm | | | |
| 14 | Sensor | | 50 | Qualitätsfunktion |
| 15 | Konsole | | 52 | Operator |
| 16 | weiterer Sensor | | 54 | Parameter |
| | | | 55 | Parameter |
| 20 | Komponente | | 56 | Bewertungsfunktion |
| 22 | Bedien- / Anzeigeelement | | 57 | Operatorknoten |
| 24 | Bedien- / Anzeigeelement | | 58 | Parameter |
| 25 | LCD-Display | | 59 | weitere Bewertungsfunktion |
| | | | | |
| 30 | Meßwerterfassung | | | |
| 32 | elektronische Schaltung | | | |
| | | | | |
| 40 | Auswerteeinheit | | | |
| 41 | Selektionseinheit | | | |
| 42 | Speicher | | | |
| 44 | Eingabegerät | | | |
| 45 | Editor | | | |

## Patentansprüche

1. System (10) zum Prüfen und Bewerten bedienungsabhängiger Vorgänge an Bedienelementen und/oder Komponenten (20) in automatisierten Produktions- und Prüfabläufen, mit einem Roboter (12), der mit wenigstens einem Sensor (14, 16) an wenigstens einem Bedien- und/oder Anzeigeelement (22, 24) der zu prüfenden bzw. zu bewertenden Komponente (20) Messwerte (M) aufnimmt und an eine Auswerteeinheit (40) weiterleitet, welche die Messwerte (M) anhand definierbarer Qualitätsfunktionen (50) analysiert und bewertet,
**dadurch gekennzeichnet,**
**dass** die Qualitätsfunktionen (50) mittels Operatoren (52) menschliche Bewertungsschemata bzw. -regeln nachbilden, nach denen ein menschlicher Gutachter eine Bewertung vornehmen würde, und anhand dieses Vorgangs als Bewertungsergebnis wenigstens eine Bewertungsaussage erstellt wird, wobei Einzelkriterien bei der Gesamtbewertung interaktiv ausgebildet sind, so dass die Güte von Bedienelementen in Relation zu anderen Bedienelementen bewertet wird.

2. System nach Anspruch 1, **dadurch gekennzeichnet, daß** die Auswerteeinheit (40) als Bewertungsergebnis ein Gesamtergebnis liefert, das in Form eines Wohlfühlfaktors oder eines Index dargestellt wird.

3. System nach Anspruch 1 oder 2, **dadurch gekennzeichnet, daß** an den Bedien- und/oder Anzeigeelementen (22, 24) ausgewählte Bedienfunktionen einleitbar sind, worauf während ihres Ablaufs von dem wenigstens einen Sensor (14, 16) mechanische, elektrische, haptische, optische und/oder akustische Meßwerte (M) aufgenommen werden.

4. System nach einem der Ansprüche 1 bis 3, **dadurch gekennzeichnet, daß** die Meßwerte (M) in Abhängigkeit von Betätigungswegen und -winkeln des Roboters (12) erfaßbar und/oder überwachbar sind.

5. System nach einem der Ansprüche 1 bis 4, **dadurch gekennzeichnet, daß** die Erfassung und Weiterleitung der Meßwerte (M) in Echtzeit erfolgt.

6. System nach einem der Ansprüche 1 bis 5, **dadurch gekennzeichnet, daß** die der Auswerteeinheit (40) zugeführten Meßwerte (M) digitalisiert sind.

7. System nach einem der Ansprüche 1 bis 6, **dadurch gekennzeichnet, daß** die Meßwerte (M) speicherbar sind.

8. System nach einem der Ansprüche 1 bis 7, **dadurch gekennzeichnet, daß** die Auswerteeinheit (40) ein Computer ist.

9. System nach Anspruch 8, **dadurch gekennzeichnet, daß** der Computer (40) wenigstens einen Speicher (42), ein Eingabegerät (44) und ein Ausgabegerät (46) aufweist.

10. System nach einem der Ansprüche 1 bis 9, **dadurch gekennzeichnet, daß** die Operatoren (52) Fuzzy-Operatoren sind.

11. System nach einem der Ansprüche 1 bis 10, **dadurch gekennzeichnet, daß** die Operatoren (52) innerhalb einer Qualitätsfunktion (50) mittels Parametern (54) relativ zueinander gewichtbar und/oder gewichtet sind.

12. System nach einem der Ansprüche 1 bis 11, **dadurch gekennzeichnet, daß** die Qualitätsfunktionen (50) mittels Parametern (55) relativ zueinander gewichtbar und/oder gewichtet sind.

13. System nach einem der Ansprüche 1 bis 12, **dadurch gekennzeichnet, daß** die Qualitätsfunktionen (50) hierarchisch angeordnet sind.

14. System nach einem der Ansprüche 1 bis 13, **dadurch gekennzeichnet, daß** die Qualitätsfunktionen (50) selbstadaptierend sind.

15. System nach einem der Ansprüche 1 bis 14, **dadurch gekennzeichnet, daß** wenigstens ein Operator (52) einen Meßwert (M) repräsentiert.

16. System nach einem der Ansprüche 1 bis 15, **dadurch gekennzeichnet, daß** wenigstens ein Operator (52) eine Perzeption (P) repräsentiert.

17. System nach einem der Ansprüche 1 bis 16, **dadurch gekennzeichnet, daß** wenigstens ein Operator (52) einen abgeleiteten Meßwert (aM) repräsentiert.

18. System nach einem der Ansprüche 1 bis 17, **dadurch gekennzeichnet, daß** wenigstens ein Operator (52) ein Prädikat (PT) repräsentiert.

19. System nach Anspruch 18, **dadurch gekennzeichnet, daß** das Prädikat (PT) von wenigstens einem Meßwert (M) oder einer Perzeption (P) und wenigstens einem abgeleiteten Meßwert (aM) abgeleitet ist.

20. System nach einem der Ansprüche 1 bis 19, **dadurch gekennzeichnet, daß** wenigstens ein Operator (52) eine logische Verknüpfung (V) repräsentiert.

21. System nach Anspruch 20, **dadurch gekennzeichnet, daß** die logische Verknüpfung (V) von mehreren Prädikate (PT) abgeleitet ist, wobei die Prädikate (PT) relativ zueinander gewichtet sind.

22. System nach Anspruch 20 oder 21, **dadurch gekennzeichnet, daß** die logische Verknüpfung (V) eine Konjunktion repräsentiert.

23. System nach einem der Ansprüche 20 bis 21, **dadurch gekennzeichnet, daß** die logische Verknüpfung (V) einen skalierbaren Aggregationsoperator repräsentiert.

24. System nach einem der Ansprüche 1 bis 23, **dadurch gekennzeichnet, daß** die Bewertung der Qualitätsfunktionen (50) mittels einer Fuzzy-Klassifikation erfolgt.

25. System nach einem der Ansprüche 1 bis 24, **dadurch gekennzeichnet, daß** die Bewertung der Qualitätsfunktionen (50) mittels ein- oder mehrdimensionalen Schwellwertverfahren erfolgt.

26. System nach einem der Ansprüche 1 bis 25, **dadurch gekennzeichnet, daß** die Bewertung der Qualitätsfunktionen (50) mittels einem neuronalen Netz erfolgt.

27. System nach einem der Ansprüche 1 bis 26, **dadurch gekennzeichnet, daß** jeder Operator (52) auf dem Ausgabegerät (46) grafisch darstellbar ist.

28. System nach Anspruch 27, **dadurch gekennzeichnet, daß** das Ausgabegerät (46) ein Bildschirm ist.

29. System nach einem der Ansprüche 1 bis 28, **dadurch gekennzeichnet, daß** jeder Operator (52) interaktiv modellierbar ist.

30. System nach einem der Ansprüche 1 bis 29, **dadurch gekennzeichnet, daß** die Operatoren (52) innerhalb einer Qualitätsfunktion (50) interaktiv miteinander verknüpfbar und/oder kombinierbar sind.

31. System nach einem der Ansprüche 1 bis 30, **dadurch gekennzeichnet, daß** jede Qualitätsfunktion (50) interaktiv modellierbar ist.

32. System nach einem der Ansprüche 1 bis 31, **dadurch gekennzeichnet, daß** die für die Gewichtung der Operatoren (52) und/oder Qualitätsfunktionen (50) vorgesehenen Parameter (54, 55) über die Eingabeeinrichtung (34) eingebbar sind.

33. System nach einem der Ansprüche 1 bis 32, **dadurch gekennzeichnet, daß** die Qualitätsfunktionen (50) einen Operatorbaum bilden.

34. System nach Anspruch 33, **dadurch gekennzeichnet, daß** jeder Knoten des Operatorbaums einen Operator (52) repräsentiert.

35. System nach Anspruch 33 oder 34, **dadurch gekennzeichnet, daß** auf dem Ausgabegerät (46) unterschiedliche Ebenen und Ansichten des Operatorbaums darstellbar sind.

## Claims

1. System (10) to test and rate operation-dependent processes on operating elements and/or components (20) in automated production and test sequences, comprising a robot (12) that records measured values (M) by means of at least one sensor (14, 18) on at least one operating and/or display element (22, 24) of the component (20) to be tested respectively to be rated and transmits said values to a rating unit (40) which by means of definable quality functions (50) analyzes and rates said measured values (M),
**characterized in**
**that** the quality functions (50) by means of operators (52) imitate human rating schemes respectively rules, according to which a human expert would make a rating, and based on said process at least one rating is made as the rating result, wherein individual criteria are interactively implemented in the total rating, so that the quality of operating elements is rated in relation to other operating elements.

2. System as claimed in claim 1, **characterized in that** the rating unit (40) yields as the rating result a total result represented in the form of a "feels good" factor or an index.

3. System as claimed in claim 1 or 2, **characterized in that** selected operating functions may be fed into the operating and/or display elements (22, 24), whereupon during their run, mechanical, electrical, haptic, optic and/or acoustic measured values (M) are recorded by the at least one sensor (14, 16).

4. System as claimed in any of claims 1 to 3, **characterized in that** the measured values (M) can be detected and/or monitored as a function of operating paths and angles of the robot (12).

5. System as claimed in any of claims 1 to 4, **characterized in that** the detection and transmission of the measured values (M) takes place in real time.

6. System as claimed in any of claims 1 to 5, **characterized in that** the measured values (M) fed to the rating unit (40) are digitized.

7. System as claimed in any of claims 1 to 6, **characterized in that** the measured values (M) can be stored.

8. System as claimed in any of claims 1 to 7, **characterized in that** the rating unit (40) is a computer.

9. System as claimed in claim 8, **characterized in that** the computer (40) comprises at least one memory (42), one input device (44) and one output device (46).

10. System as claimed in any of claims 1 to 9, **characterized in that** the operators (52) are fuzzy operators.

11. System as claimed in any of claims 1 to 10, **characterized in that** the operators (52) within a quality function 50) may be weighted relative to one another and/or are weighted relative to one another by means of parameters (54).

12. System as claimed in any of claims 1 to 11, **characterized in that** the quality functions (50) may be weighted relative to one another and/or are weighted relative to one another by means of parameters (55).

13. System as claimed in any of claims 1 to 12, **characterized in that** the quality functions (50) are arrayed hierarchically.

14. System as claimed in any of claims 1 to 13, **characterized in that** the quality functions (50) are self-adapting.

15. System as claimed in any of claims 1 to 14, **characterized in that** at least one operator (52) represents a measured value (M).

16. System as claimed in any of claims 1 to 15, **characterized in that** at least one operator (52) represents a perception (P).

17. System as claimed in any of claims 1 to 16, **characterized in that** at least one operator (52) represents a derived measured value (aM).

18. System as claimed in any of claims 1 to 17, **characterized in that** at least one operator (52) represents a predicate (PT).

19. System as claimed in claim 18, **characterized in that** the predicate (PT) is derived from at least a measured value (M) or a perception (P) and at least one derived measured value (aM).

20. System as claimed in any of claims 1 to 19, **characterized in that** at least one operator (50) represents a logic link (V).

21. System as claimed in claim 20, **characterized in that** the logic link (V) is derived from several predicates (PT) which are weighted relative to one another.

22. System as claimed in claim 20 or 21, **characterized in that** the logic link (V) represents a conjunction.

23. System as claimed in any of claims 20 to 21, **characterized in that** the logic link (V) represents a scalable aggregation operator.

24. System as claimed in any of claims 1 to 23, **characterized in that** the rating of the quality functions (50) is implemented using a fuzzy classification.

25. System as claimed in any of claims 1 to 24, **characterized in that** the rating of the quality functions (50) is implemented using a one-dimensional or multi-dimensional threshold value method.

26. System as claimed in any of claims 1 to 25, **characterized in that** the rating of the quality functions (50) is implemented using a neuronal network.

27. System as claimed in any of claims 1 to 26, **characterized in that** each operator (52) may be graphically displayed on the output device (46).

28. System as claimed in claim 27, **characterized in that** the output device (46) is a monitor.

29. System as claimed in any of claims 1 to 28, **characterized in that** each operator (52) may be modeled interactively.

30. System as claimed in any of claims 1 to 29, **characterized in that** the operators (52) may be interactively linked and/or combined with one another within a quality function (50).

31. System as claimed in any of claims 1 to 30, **characterized in that** each quality function (50) may be modeled interactively.

32. System as claimed in any of claims 1 to 31, **characterized in that** the parameters (54, 55) provided for weighting the operators (52) and/or the quality functions (50) may be entered by means of the input device (34).

33. System as claimed in any one of claims 1 to 32, **characterized in that** the quality functions (50) constitute an operator tree.

34. System as claimed in claim 33, **characterized in that** each node of the operator tree represents an operator (52).

35. System as claimed in claim 33 or 34, **characterized in that** different planes and views of the operator tree may be represented on the output device (46).

## Revendications

1. Système (10) destiné à vérifier et évaluer des procédures au niveau d'éléments et/ou de composants de commande et de manoeuvre (20) dans des processus de production et de vérification automatisés, comprenant un robot (12), qui, avec au moins un capteur (14, 16), enregistre, au niveau d'au moins un élément de commande ou de manoeuvre et/ou de visualisation (22, 24) du composant (20) à vérifier et à évaluer, des valeurs de mesure (M), et les transmet à une unité de traitement de données (40), qui analyse et évalue les valeurs de mesure (M) à l'aide de fonctions de qualité (50) pouvant être définies,
**caractérisé**
**en ce que** les fonctions de qualité (50) reproduisent, au moyen d'opérateurs (52), des schémas d'évaluation humains et des règles d'évaluation humaines, selon lesquels un expert humain entreprendrait une évaluation, et à l'aide de cette procédure on établit en tant que résultat d'évaluation, au moins une prévision d'évaluation, des critères individuels étant conçus interactifs lors de l'évaluation globale, de sorte que la qualité d'éléments de commande et de manoeuvre est évaluée en relation avec d'autres éléments de commande et de manoeuvre.

2. Système selon la revendication 1, **caractérisé en ce que** l'unité de traitement de données (40) fournit, en guise de résultat d'évaluation, un résultat global qui est représenté sous la forme d'un facteur de bien-être ou de confort ou d'un indice.

3. Système selon la revendication 1 ou la revendication 2, **caractérisé en ce que** des fonctions de commande et de manoeuvre choisies peuvent être initiées sur les éléments de commande et de manoeuvre, suite à quoi pendant leur déroulement, ledit au moins un capteur (14, 16) enregistre des valeurs de mesure (M) mécaniques, électriques, haptiques, optiques et/ou acoustiques.

4. Système selon l'une des revendications 1 à 3, **caractérisé en ce que** les valeurs de mesure (M) peuvent être acquises et/ou surveillées en fonction de courses et d'angles d'actionnement du robot (12).

5. Système selon l'une des revendications 1 à 4, **caractérisé en ce que** l'acquisition et le transfert des valeurs de mesure (M) s'effectuent en temps réel.

6. Système selon l'une des revendications 1 à 5, **caractérisé en ce que** les valeurs de mesure (M) transmises à l'unité de traitement de données (40) sont numérisées.

7. Système selon l'une des revendications 1 à 6, **caractérisé en ce que** les valeurs de mesure (M) peuvent être mémorisées.

8. Système selon l'une des revendications 1 à 7, **caractérisé en ce que** l'unité de traitement de données (40) est un ordinateur.

9. Système selon la revendication 8, **caractérisé en ce que** l'ordinateur (40) comporte au moins une mémoire (42), une unité de saisie ou d'entrée (44) et un périphérique de sortie (46).

10. Système selon l'une des revendications 1 à 9, **caractérisé en ce que** les opérateurs (52) sont des opérateurs Fuzzy ou de logique floue.

11. Système selon l'une des revendications 1 à 10, **caractérisé en ce que** les opérateurs (52) peuvent être pondérés et/ou sont pondérés les uns par rapport aux autres à l'intérieur d'une fonction de qualité (50), au moyen de paramètres (54).

12. Système selon l'une des revendications 1 à 11, **caractérisé en ce que** les fonctions de qualité (50) peuvent être pondérées et/ou sont pondérées les unes par rapport aux autres au moyen de paramètres (55).

13. Système selon l'une des revendications 1 à 12, **caractérisé en ce que** les fonctions de qualité (50) sont hiérarchisées.

14. Système selon l'une des revendications 1 à 13, **caractérisé en ce que** les fonctions de qualité (50) sont auto-adaptatives.

15. Système selon l'une des revendications 1 à 14, **caractérisé en ce qu'**au moins un opérateur (52) représente une valeur de mesure (M).

16. Système selon l'une des revendications 1 à 15, **caractérisé en ce qu'**au moins un opérateur (52) représente une perception (P).

17. Système selon l'une des revendications 1 à 16, **caractérisé en ce qu'**au moins un opérateur (52) représente une valeur de mesure dérivée (aM).

18. Système selon l'une des revendications 1 à 17, **caractérisé en ce qu'**au moins un opérateur (52) représente une prédiction (PT).

19. Système selon la revendication 18, **caractérisé en ce que** la prédiction (PT) est dérivée d'au moins une valeur de mesure (M) ou d'une perception (P) et d'au moins une valeur de mesure dérivée (aM).

20. Système selon l'une des revendications 1 à 19, **caractérisé en ce qu'**au moins un opérateur (52) représente une combinaison ou un lien logique (V).

21. Système selon la revendication 20, **caractérisé en ce que** la combinaison logique (V) est dérivée de plusieurs prédictions (PT), les prédictions (PT) étant pondérées les unes par rapport aux autres.

22. Système selon la revendication 20 ou la revendication 21, **caractérisé en ce que** la combinaison logique (V) représente une conjonction.

23. Système selon l'une des revendications 20 à 21, **caractérisé en ce que** la combinaison logique (V) représente un opérateur d'agrégation évolutif.

24. Système selon l'une des revendications 1 à 23, **caractérisé en ce que** l'évaluation des fonctions de qualité (50) s'effectue au moyen d'une classification Fuzzy ou à logique floue.

25. Système selon l'une des revendications 1 à 24, **caractérisé en ce que** l'évaluation des fonctions de qualité (50) s'effectue au moyen de procédés à valeur de seuil à une ou plusieurs dimensions.

26. Système selon l'une des revendications 1 à 25, **caractérisé en ce que** l'évaluation des fonctions de qualité (50) s'effectue au moyen d'un réseau neuronal.

27. Système selon l'une des revendications 1 à 26, **caractérisé en ce que** chaque opérateur (52) peut être représenté graphiquement sur le périphérique de sortie (46).

28. Système selon la revendication 27, **caractérisé en ce que** le périphérique de sortie (46) est un écran de visualisation.

29. Système selon l'une des revendications 1 à 28, **caractérisé en ce que** chaque opérateur (52) peut être modélisé de manière interactive.

30. Système selon l'une des revendications 1 à 29, **caractérisé en ce que** les opérateurs (52) peuvent, à l'intérieur d'une fonction de qualité (50), être mutuellement liés et/ou combinés de manière interactive.

31. Système selon l'une des revendications 1 à 30, **caractérisé en ce que** chaque fonction de qualité (50) peut être modélisée de façon interactive.

32. Système selon l'une des revendications 1 à 31, **caractérisé en ce que** les paramètres (54, 55) prévus pour la pondération des opérateurs (52) et/ou des fonctions de qualité (50) peuvent être introduits par l'intermédiaire de l'unité de saisie ou d'entrée (34).

33. Système selon l'une des revendications 1 à 32, **caractérisé en ce que** les fonctions de qualité (50) forment une arborescence d'opérateurs.

34. Système selon la revendication 33, **caractérisé en ce que** chaque noeud de l'arborescence d'opérateurs représente un opérateur (52).

35. Système selon la revendication 33 ou la revendication 34, **caractérisé en ce que** sur le périphérique de sortie (46) peuvent être représentés plusieurs niveaux ou plans et vues de l'arborescence d'opérateurs.
